(19) Europäisches Patentamt
European Patent Office
Office européen des brevets

(11) EP 4 589 273 A1

(12) EUROPEAN PATENT APPLICATION
published in accordance with Art. 153(4) EPC

(43) Date of publication:
23.07.2025 Bulletin 2025/30

(51) International Patent Classification (IPC):
G01L 5/00 (2006.01)

(21) Application number: 22958833.0

(52) Cooperative Patent Classification (CPC):
G01L 5/00

(22) Date of filing: 16.09.2022

(86) International application number:
PCT/JP2022/034691

(87) International publication number:
WO 2024/057513 (21.03.2024 Gazette 2024/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Hitachi Astemo, Ltd.
Ibaraki 312-8503 (JP)

(72) Inventors:
• HOSOKAWA, Takeo
Hitachinaka-shi, Ibaraki 312-8503 (JP)
• YUKI, Fumio
Hitachinaka-shi, Ibaraki 312-8503 (JP)
• SOMA, Atsuo
Hitachinaka-shi, Ibaraki 312-8503 (JP)

(74) Representative: MERH-IP Matias Erny Reichl
Hoffmann
Patentanwälte PartG mbB
Paul-Heyse-Straße 29
80336 München (DE)

(54) PHYSICAL QUANTITY DETECTION DEVICE

(57) Provided is a physical quantity detection device capable of reducing current consumption by controlling an energization method even during a ground contact period. A physical quantity detection device 2 according to the present invention extracts a step-in peak value 43 of strain occurring at a time Pa of step-in when a strain detection region 10a of a tire 10 comes into ground contact with a road surface 30 and an intermediate time point peak value 42 of strain occurring at an intermediate time point Pb between the time of step-in and a time of kick-out when the strain detection region of the tire is separated from the road surface, calculates a cycle in which the step-in peak value and the intermediate time point peak value occur subsequently, based on a time difference t from the step-in peak value to the intermediate time point peak value or an inclination of a change in strain, and energizes a strain detection unit 3 in accordance with the cycle.

FIG. 7

$$t_{Pa-1} = \text{CYCLE CONVERSION COEFFICIENT} \times t$$
$$t_{Pb-1} = t + t_{Pa-1}$$

EP 4 589 273 A1

**Description**

Technical Field

The present invention relates to a physical quantity detection device that detects a physical quantity of a state of a tire.

Background Art

In a case where a device (physical quantity detection device) that detects a physical quantity regarding a state of a tire is attached to the tire, data is exchanged with a vehicle control device provided in a vehicle by wireless communication. Since the tire is rotatably supported by the vehicle, it is difficult to supply electric power from the vehicle to the physical quantity detection device. Therefore, it is necessary to provide a power source in the physical quantity detection device, and for example, a coin battery or the like may be used as the power source in the physical quantity detection device. That is, it is necessary to drive the physical quantity detection device on the basis of a limited power source such as a coin battery.
On the other hand, since the physical quantity detection device is provided in the tire, replacement cannot be easily performed. For this reason, it is important to reduce current consumption of the physical quantity detection device, and it is particularly necessary to reduce current consumption during the operation of a microcomputer (MPU), an antenna drive unit used for wireless communication, or the like, which has large current consumption among the physical quantity detection devices.
PTL 1 discloses a technique in which only information on a ground contact side region or only information on a non-ground contact side region is transmitted to a vehicle side, and necessary tire information is transmitted to the vehicle side with small current consumption.

Citation List

Patent Literature

PTL 1: Japanese Patent No. 6317999

Summary of Invention

Technical Problem

In PTL 1, two peak positions of a sensor measurement value serving as a step-in point and a kick-out point are calculated, an interval between the two peak positions is set as a ground contact side region of a tire, and the ground contact side region is set as a transmission section to transmit tire information acquired by a sensor to the vehicle side. For this reason, at least for a time until a sensor arrangement portion of the tire is separated from a ground contact with a road surface, the sensor needs to receive the supply of the current from the power source, and the current consumption increases. That is, since the current consumption increases even in a portion unnecessary as information, there is a possibility that the effect for reducing the current consumption is not sufficiently exhibited.
An object of the present invention is to provide a physical quantity detection device that achieves low current consumption by controlling an energization method even during a ground contact period in which a sensor arrangement portion of a tire is in ground contact with a road surface, without requiring a time until a sensor mounted on the tire is separated from the ground contact with the road surface.

Solution to Problem

The present invention has been made in view of the above problems, and adopts, for example, the configuration described in the claims.
A physical quantity detection device according to the present invention is a physical quantity detection device that is installed in a tire and detects a physical quantity of a state of the tire. The physical quantity detection device includes: a strain detection unit that detects strain of the tire; and a signal processing unit that processes a detection signal detected by the strain detection unit. The signal processing unit extracts a step-in peak value of strain occurring on any one side of compression or tension at a time of step-in in which a strain detection region of the tire comes into ground contact with a road surface by rotation of the tire, and an intermediate time point peak value of strain occurring on another side of compression or tension at an intermediate time point between the time of step-in and a time of kick-out in which the strain detection region of the tire is separated from the road surface, and calculates a cycle in which the step-in peak value and the intermediate time point peak value occur subsequently, based on a time difference between the step-in peak value and the intermediate time point peak value or an inclination of a change in the strain, and energizes the strain detection unit in accordance with the cycle.

Advantageous Effects of Invention

According to the present invention, it is possible to provide a physical quantity detection device capable of making a time for energizing a strain sensor shorter than a time taken from a step-in in which a strain detection region of a tire comes into ground contact with a road surface due to a rotation of the tire to a kick-out in which the strain detection region is separated from the road surface, and achieving low current consumption during a ground contact period from the step-in to the kick-out.

Further features related to the present invention will become apparent from the description of the present specification and the accompanying drawings. In addition, problems, configurations, and effects other than those described above will be clarified by the following description of embodiment.

Brief Description of Drawings

[FIG. 1] FIG. 1 is a block diagram illustrating a schematic configuration of a vehicle mounted with a strain sensor of the present embodiment.
[FIG. 2] FIG. 2 is a schematic view illustrating a state in which a tire having the strain sensor rolls on a road surface as a vehicle travels.
[FIG. 3] FIG. 3 is an explanatory view illustrating a sensor signal waveform of the strain sensor according to a rotation state of the tire.
[FIG. 4] FIG. 4 is a diagram illustrating a hardware configuration of a physical quantity detection device according to the present embodiment.
[FIG. 5] FIG. 5 is a functional block diagram illustrating a configuration of a signal processing unit of the physical quantity detection device according to the present embodiment.
[FIG. 6] FIG. 6 is an example of a flowchart illustrating processing of the signal processing unit according to the present embodiment.
[FIG. 7] FIG. 7 is a graph illustrating an example of waveform data measured by the physical quantity detection device according to the present embodiment and presence or absence of energization at that time.
[FIG. 8] FIG. 8 is a schematic diagram illustrating an example of correction means of an energization time width at a step-in peak processed in the physical quantity detection device according to the present embodiment.
[FIG. 9] FIG. 9 is a diagram illustrating a measured waveform of a strain value including an irregular value of the physical quantity detection device according to the present embodiment.
[FIG. 10] FIG. 10 is a timing chart illustrating the presence or absence of energization in each block of the physical quantity detection device according to the present embodiment.
[FIG. 11] FIG. 11 is a plan view of a strain detection module.
[FIG. 12] FIG. 12 is a cross-sectional view taken along line A-A of FIG. 11.

Description of Embodiments

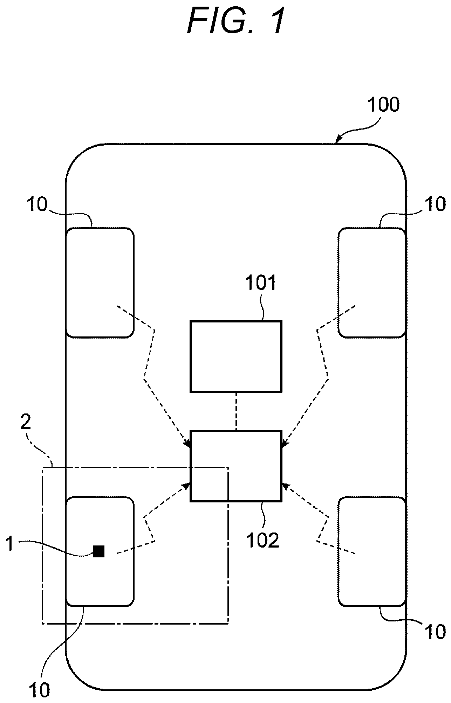

Hereinafter, an embodiment of the present invention will be described in detail with reference to FIGS. 1 to 12.
In all the drawings for describing the embodiment, the same members are denoted by the same reference numerals in principle, and repeated description thereof will be omitted. In addition, in each of a cross-sectional view, a front view, and a side view, directions are specified by XYZ axes orthogonal to each other, and +X is defined as "right", -X is defined as "left", +Y is defined as "upper", -Y is defined as "lower", +Z is defined as "front", and -Z is defined as "rear".
FIG. 1 is a block diagram illustrating a schematic configuration of a vehicle mounted with a strain sensor of the present embodiment.
The strain sensor 1 of the present embodiment is applied to, for example, a vehicle 100 having a function of advanced driver-assistance systems (ADAS) or autonomous driving (AD). As illustrated in FIG. 1, the vehicle 100 includes four tires 10, a control unit 101, and a receiver 102. Then, the strain sensor 1 is installed to each tire 10. The vehicle 100 is not limited to a four-wheeled vehicle, and may be a two-wheeled vehicle or a vehicle, such as a truck or a bus, installed with a plurality of tires such as six wheels or eight wheels. In addition, in the present embodiment, one strain sensor 1 is installed to each of all the tires 10, but one strain sensor 1 may be installed to only one of the tires 10.

The control unit 101 includes an electronic control unit (ECU), and includes hardware including a central processing unit (CPU), a memory such as a ROM and a RAM, and an input/output interface. Then, the memory stores a software program for performing various types of arithmetic processing in an executable state. The receiver 102 receives signals detected by a plurality of strain sensors 1 by wireless communication, and supplies the signals to the control unit 101 as output signals of the respective strain sensors 1. The control unit 101 performs various vehicle controls using the output signals of the strain sensors 1.

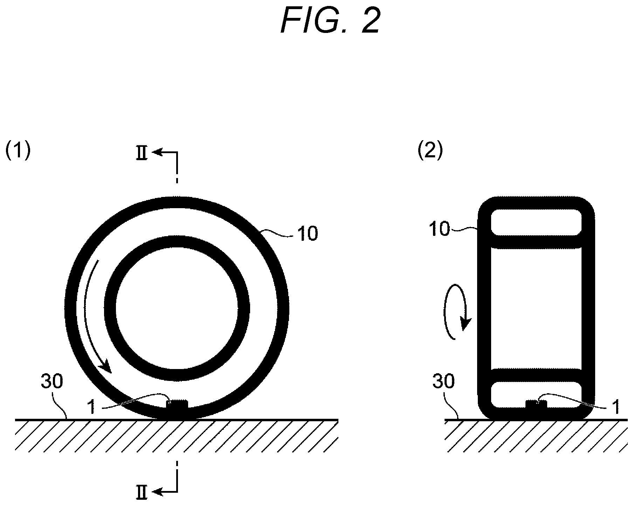

FIG. 2 is a schematic view illustrating a state in which a tire having a strain sensor rolls on a road surface as a vehicle travels. FIG. 2(1) is a side view of the tire, and FIG. 2(2) is a cross-sectional view taken along line II-II of FIG. 2(1).

The strain sensor 1 is installed inside the tire 10 of the vehicle, for example, and detects strain of the tire 10. The strain sensor 1 is fixed to an inner peripheral surface (hereinafter, referred to as a tire inner peripheral surface) of a tread portion of the tire 10, and detects, as the strain, deformation in a compression direction and a tensile direction generated on the tire inner peripheral surface. In the present embodiment, the tire 10 is a tubeless tire which is assembled to a wheel (not illustrated) and in which a sealed space formed between the wheel and the tire 10 is filled with a high-pressure gas, but may be a tube-type tire in which an air tube is disposed in the sealed space. One strain sensor 1 is disposed in one tire, but the present invention is not limited thereto, and a plurality of strain sensors 1 may be disposed at predetermined intervals in the circumferential direction of the tire inner peripheral surface.

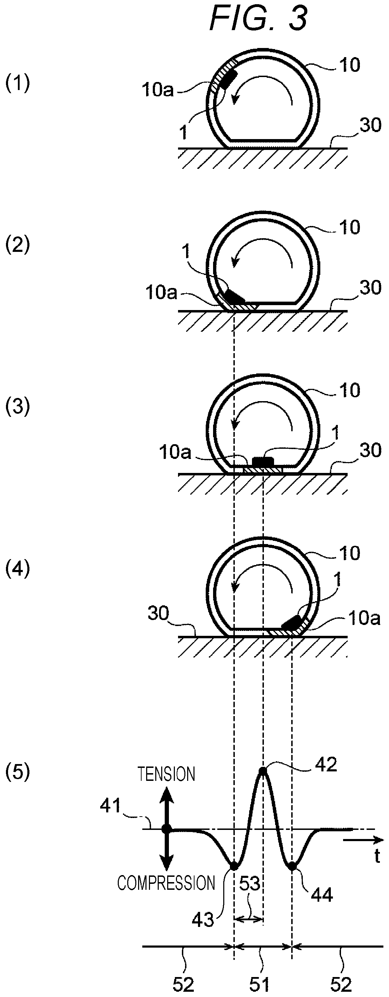

In the case of the situation illustrated in FIG. 2, a road surface 30 is a flat road surface, and a portion (strain detection region 10a: see FIG. 3) of the tire 10 where the strain sensor 1 is disposed is in ground contact with the road surface 30. In this situation, the strain sensor 1 detects a strain amount corresponding to the deformation of the tire 10.

Next, a sensor signal waveform 40 in a case where one strain sensor 1 is used will be described with reference to FIG. 3.

FIGS. 3(1) to 3(4) are views illustrating a rotation state of the tire, and FIG. 3(5) is an explanatory diagram illustrating a sensor signal waveform of the strain sensor according to the rotation state of the tire. FIG. 3(1) illustrates a non-ground contact state in which the strain detection region of the tire is separated from the road surface. FIGS. 3(2) to 3(4) illustrate a ground contact state in which the strain detection region of the tire is in ground contact with the road surface, FIG. 3(2) illustrates a state at the time of step-in in which the strain detection region starts the ground contact with the road surface, and FIG. 3(4) illustrates a state at the time of kick-out in which the strain detection region is separated from the road surface. Then, FIG. 3(3) illustrates a state at an intermediate time point between the time of the step-in and the time of the kick-out.

When the tire 10 rolls on the road surface 30 as illustrated in FIGS. 3(1) to 3(4), the strain sensor 1 outputs the sensor signal waveform 40 that changes depending on the state of the rotating tire 10 with respect to the road surface 30 as illustrated in FIG. 3(5). The strain sensor 1 outputs the sensor signal waveform 40 having a reference level 41, a positive level changing to positive (tension) from the reference level 41, and a negative level changing to negative (compression) from the reference level 41.

When the strain detection region 10a capable of detecting strain of the tire 10 is in a non-ground contact period 52 in which the strain detection region is not in ground contact with the road surface 30 as illustrated in FIG. 3(1), the strain sensor 1 maintains the reference level (steady value) 41 of the sensor signal waveform 40.

Then, when the strain detection region 10a of the tire 10 is in a ground contact period 51 in which the strain detection region in in ground contact with the road surface 30, and further at the intermediate time point between the time of the step-in and the time of the kick-out as illustrated in FIG. 3(3), an intermediate time point peak value 42 which is a positive level peak value (maximum value) of the sensor signal waveform 40 is output. In addition, at the time of the step-in when the strain detection region 10a of the tire 10 comes into ground contact with the road surface 30 and at the time of the kick-out when the strain detection region is separated from the road surface, a step-in peak value 43 and a kick-out peak value 44, which are negative level peak values of the sensor signal waveform 40, are output.

As described above, the sensor signal waveform 40 has two sensor displacement points (the step-in peak value 43 and the kick-out peak value 44) at the moments (the time of the step-in and the time of the kick-out) when the strain detection region 10a of the tire 10 comes into ground contact with or is separated from the road surface 30, and one sensor displacement point (intermediate time point peak value 42) in the ground contact period 51 in which the strain detection region 10a of the tire 10 is in contact with the road surface 30. Then, a time 53 from the time of the step-in to the intermediate time point is about a half of the ground contact period 51. The sensor signal waveform 40 detected in this manner changes depending on various physical quantities (load amount, air pressure, speed, temperature, and the like).

In the present embodiment, the moment when the strain detection region 10a of the tire 10 comes into ground contact with or is separated from the road surface 30 is defined as negative (compression), and the state at the intermediate time point when the strain detection region 10a of the tire 10 is in contact with the road surface 30 is defined as positive (tension). However, the same can be considered even when the positive and negative values are reversed depending on the mounting direction of the strain sensor 1 on the tire inner peripheral surface. As described above, the strain sensor 1 is mounted on the tire inner peripheral surface of the tire 10, and measures a strain amount of strain according to deformation of the tire 10.

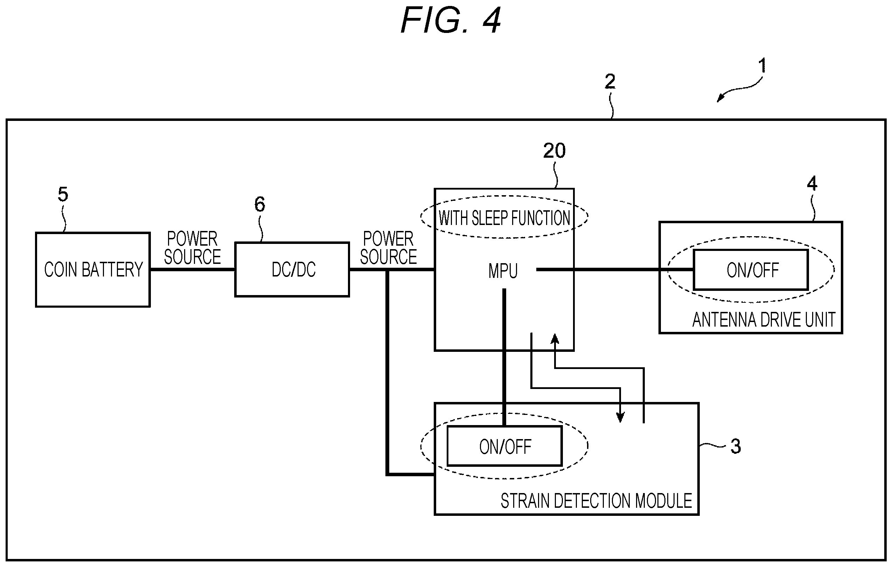

FIG. 4 is a block diagram illustrating a hardware configuration of the physical quantity detection device according to the present embodiment.

The strain sensor 1 includes a physical quantity detection device 2 that detects a physical quantity of a tire by using a sensor signal that is a strain amount. The physical quantity detection device 2 includes a coin battery 5, a DC/DC converter 6, a micro processor unit (MPU) 20, an antenna drive unit 4, and a strain detection module (strain detection unit) 3. The MPU 20 receives supply of a boosted constant voltage from the coin battery 5 via the DC/DC converter 6, and supplies the boosted constant voltage to the strain detection module 3 and the antenna drive unit.

The voltage value of the coin battery 5 changes depending on a temperature condition or the like. The DC/DC converter 6 is provided to stabilize a voltage value supplied from the coin battery 5 to the MPU 20 and the strain detection module 3. The MPU 20 and the strain detection module 3 are electrically connected, and the MPU 20 and the antenna drive unit 4 are electrically connected. The MPU 20 realizes, by a semiconductor switch or the like, an ON/OFF operation of a power supply to the strain detection module 3 and the antenna drive unit 4, so as to reduce current consumption. The MPU 20 has a sleep function, and can stop an unnecessary operation of a clock circuit or the like by shifting to a sleep mode except at the time of activation, thereby achieving low current consumption.

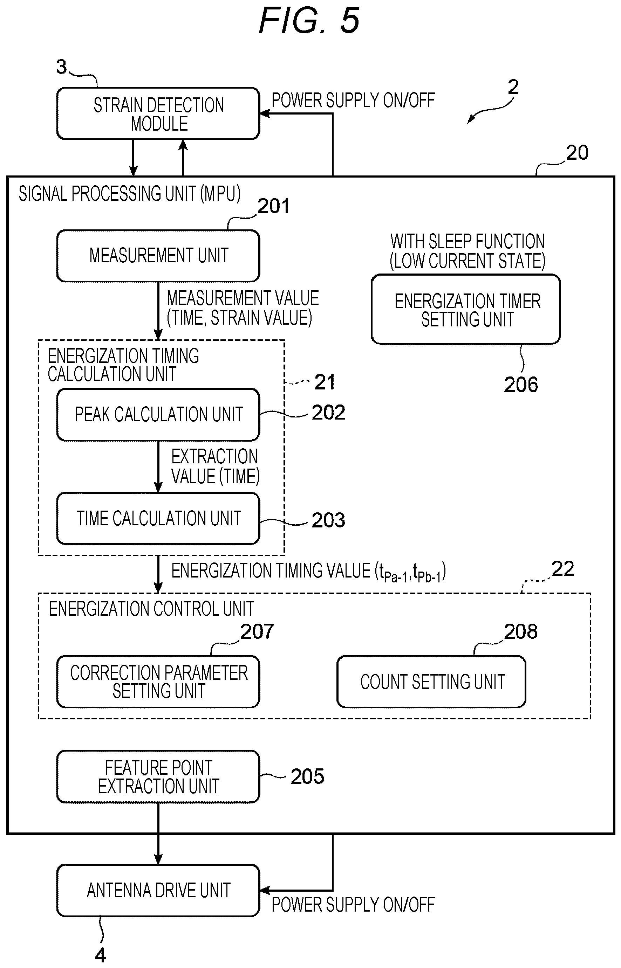

FIG. 5 is a block diagram illustrating a configuration of a signal processing unit of the physical quantity detection device according to the present embodiment.

The MPU 20 of the physical quantity detection device 2 implements a signal processing unit as an internal function by executing a program in a memory by a processor in the MPU 20. Hereinafter, the MPU 20 may be referred to as a signal processing unit 20.

The signal processing unit 20 measures a strain value by performing serial communication with the strain detection module 3 or reading an analog voltage within a specified time set in advance in an energization timer setting unit 206 according to an activation command generated periodically. The measured strain value is transmitted from a measurement unit 201 to an energization timing calculation unit 21 together with time information of the measured point.

The energization timing calculation unit 21 includes a peak calculation unit 202 and a time calculation unit 203. The peak calculation unit 202 calculates a step-in peak value of the strain occurring on any one of compression or tension at the time of step-in when the strain detection region 10a of the tire 10 comes into ground contact with the road surface 30 due to the rotation of the tire 10, and an intermediate time point peak value of the strain occurring on the other of the compression or the tension at an intermediate time point between the time of the step-in and the time of kick-out when the strain detection region 10a of the tire 10 is separated from the road surface 30.

In the present embodiment, the peak calculation unit 202 calculates the intermediate time point peak value 42 at a positive level (compression side) of the sensor signal waveform 40 and the step-in peak value 43 and the kick-out peak value 44 at a negative level (tension side). Then, a time tPa at the point where the step-in peak value 43 is measured and a time tPb at the point where the intermediate time point peak value 42 is measured are extracted. The time calculation unit 203 calculates a time difference t between the first step-in peak value 43 calculated by the peak calculation unit 202 and the intermediate time point peak value 42, and calculates a time $t_{Pa-1}$ until the next step-in peak value 43 occurring after one rotation of the tire 10 and a time $t_{Pb-1}$ until the intermediate time point peak 42.

In a case where the tire 10 is rotating at a constant rotation speed, a relationship between the time difference between the step-in peak value 43 and the intermediate time point peak value 42 and a time required for one rotation of the tire 10 is in a proportional relationship. Therefore, the time difference t between the first step-in peak value 43 and the intermediate time point peak value 42 can be used to calculate timings at which the next step-in peak 43 and the intermediate time point peak value 42 occur.

The energization timing calculation unit 21 calculates an energization timing value ($t_{Pa-1}$, $t_{Pb-1}$) to energize the strain detection module 3 by using the calculation result of the timings at which next step-in peak value 43 and the intermediate time point peak value 42 occur.

Subsequently, an energization control unit 22 controls energization to the strain detection module 3 and the antenna drive unit 4. The energization control unit 22 includes a correction parameter setting unit 207 and a count setting unit 208.

The correction parameter setting unit 207 sets a correction parameter for correcting the width of the energization time for energizing at the step-in peak value 43 and the intermediate time point peak value 42, which are calculated by the time calculation unit 203 and occur after one rotation of the tire.

The count setting unit 208 sets the number of times of measurement of the peak value. When the count setting unit 208 determines that the peak value has been measured a preset number of times, a feature point extraction unit 205 extracts a feature point having a peak value within a preset threshold from among a plurality of measurement values and provides data of the peak value of the feature point to the antenna drive unit 4, and the data is outputs from the antenna drive unit 4 to the outside.

The antenna drive unit 4 transmits the data of the feature point supplied from the feature point extraction unit 205 to the receiver 102 of the vehicle 100 by wireless communication, and provides the data to the control unit 101. In this way, the communication time in the antenna drive unit 4 can be shortened, and further the current consumption can be reduced.

Note that the data of the feature point may be transmitted every time the measurement unit 201 measures the peak value of the strain value.

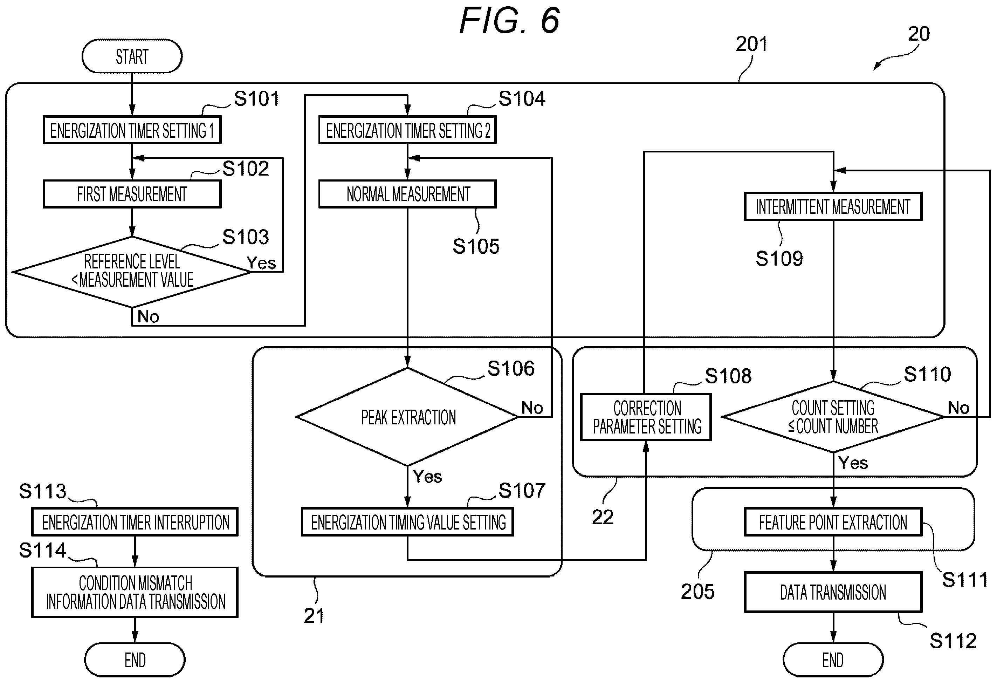

FIG. 6 is an example of a flowchart illustrating processing of the signal processing unit according to the present embodiment.

The processing performed by the signal processing unit 20 will be described by using, as an example, a case of the strain detection module 3 mounted in a direction in which the sensor signal waveform 40 of the strain sensor 1 moves according to the rotation state of the tire 10 as illustrated in FIGS. 3(1) to 3(5), that is, a case where the moment (the time of the step-in or the time of kick-out) at which the strain detection region 10a of the tire 10 comes into contact with or separates from the road surface 30 is defined as negative (compression) and the state (intermediate time point) in which the strain detection region 10a of the tire 10 is in ground contact with the road surface 30 is defined as positive (tension).

After the activation, the energization timer setting unit 206 sets energization timer setting 1 which is a predetermined data acquisition period (S101). Then, the strain value detected by the strain detection module 3 in the measurement unit 201 is measured as a first measurement value (S102). Next, the first measurement value is compared with the reference level 41 (S103), and in a case where the measurement value is less than the reference level 41 (No in S103), the energization timer setting unit 206 sets energization timer setting 2 (S104), then the normal measurement is performed (S105), and a peak extraction process is performed (S106).

On the other hand, in a case where the measurement value is the reference level 41 or more (Yes in S103), the measurement value is considered outside a normal measurement target, and it is determined whether a predetermined time set by the energization timer setting 1 has elapsed. In a case where the elapsed time is less than the predetermined time, the comparison process in step S103 is performed again. In a case where the elapsed time is equal to or greater than the predetermined time, it is determined to be outside a stable driving state, and the process proceeds to the next process.

In the peak extraction process S106, a step-in peak value of the strain occurring on any one of compression or tension at the time of step-in when the strain detection region 10a of the tire 10 comes into ground contact with the road surface 30 due to the rotation of the tire 10, and an intermediate time point peak value of the strain occurring on the other of the compression or the tension at an intermediate time point between the time of the step-in and the time of kick-out when the strain detection region 10a of the tire 10 is separated from the road surface 30 are extracted.

In the peak extraction process S106, it is determined whether the positive level peak value 42 and the negative level peak value 43 are aligned together. As the positive level peak value 42, for example, it is sufficient that a measurement value at a time point when the measurement value turns from increase to decrease or a measurement value at a time point when a change in time derivative at the time of measurement from positive to negative is detected is used. Similarly, for the negative level peak value 43, for example, it is sufficient that a measurement value at a time point when the measurement value turns from decrease to increase or a measurement value at a point when a change in time derivative at the time of measurement from negative to positive is detected is used.

In a case where both the positive level peak value 42 and the negative level peak value 43 are aligned, the energization timing value is set (S107). Then, the process proceeds to the energization control unit 22, and the correction parameter setting unit 207 sets the correction parameter (S108). Then, energization to the strain detection module 3 is intermittently performed on the basis of the corrected energization timing value, and the strain value is intermittently measured (S109), that is, the strain value is measured only at the time of energization.

In a case where it is determined in step S106 that both the positive level peak value 42 and the negative level peak value 43 are not aligned (No in S106), it is determined to be outside the stable driving state, and the process proceeds to the next process. In this way, in a case where stable driving is not started within a certain period of time, except cases such as when a car is stopped, when measurement is interrupted, or when a car starts moving, or in a case where both the positive level peak value 42 and the negative level peak value 43 are not aligned, it is determined to be outside the stable driving state, and unnecessary energization time can be shortened to realize low current consumption.

The peak value is measured at pinpoints by the intermittent measurement in step S109, and when the number of measured peak values becomes equal to or larger than the count number (number of times of measurement) set in the count setting unit 208 (Yes in S110), the feature point extraction unit 205 extracts a feature point from a plurality of measurement values (peak values) (S111), and the data of the feature point is transmitted from the antenna drive unit 4 to the receiver 102 (S112).

Note that, in a case where the direction in which the strain detection module 3 is mounted is reversed, the direction of increase/decrease of the measurement value is reversed, and thus, the same effect can be obtained by reversing the magnitude relationship described above.

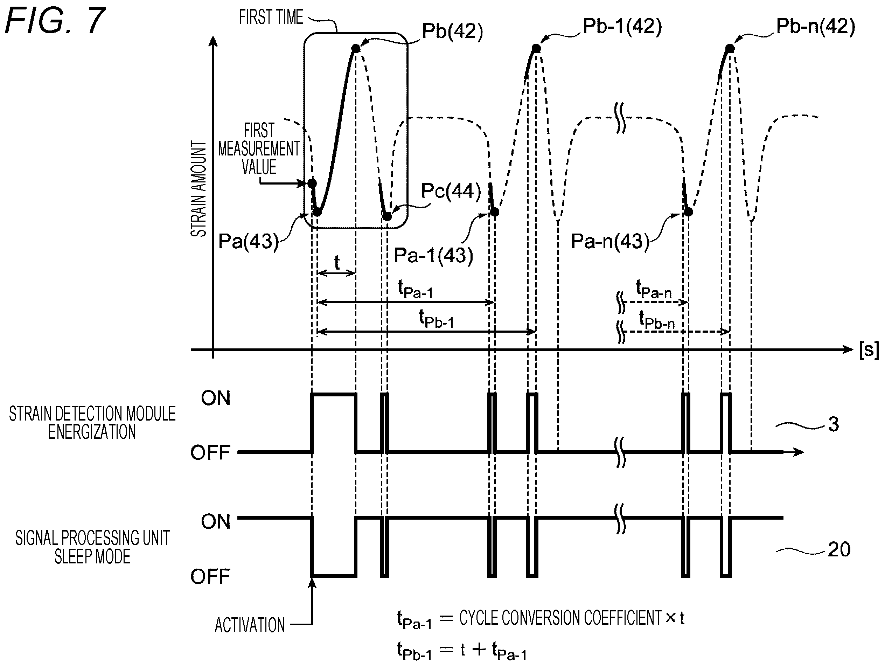

Next, an example of reducing current consumption during activation will be described with reference to FIG. 7.

FIG. 7 is a graph illustrating an example of waveform data measured by the physical quantity detection device according to the present embodiment and the presence or absence of energization at that time.

In the present embodiment, a waveform shows the time on a horizontal axis and the strain amount on a vertical axis, a solid line portion represents a state in which the strain detection module 3 is energized, and a dotted line portion represents a state in which the strain detection module 3 is in a non-energization state. As illustrated in FIG. 7, at the first time after activation, the strain value and time are measured by the measurement unit 201 (FIG. 5). Next, the first measurement value and the reference level 41 (see FIG. 3(5)) is compared (S103 in FIG. 6), and since the first measurement value is less than the reference level 41, normal measurement is performed in which a change in strain value is continuously measured from the measurement of the first measurement value to the intermediate time point peak value 42 (S105 in FIG. 6).

Thereafter, from the time difference t between the intermediate time point peak value 42 (Pb in FIG. 7) at the positive level and the step-in peak value 43 (Pa in FIG. 7) at the negative level, the energization timing that is the time between the intermediate time point peak value 42 (Pb-1 in FIG. 7) at the positive level and the step-in peak value 43 (Pa-1 in FIG. 7) at the negative level to occur next time is obtained by the energization timing calculation unit 21 (FIG. 5). Thereafter, energization timings are set to repeat for n-count set by the count setting unit 208 (FIG. 5) that sets the repetition for the required n number of rotations and to perform energization at each of the intermediate time point peak value 42 and the step-in peak value 43, and the strain value is intermittently measured by performing energization in accordance with the energization timings.

Since a relationship between the time difference t between the step-in peak value 43 and the intermediate time point peak value 42 and a time taken for the tire 10 to make one rotation (for example, a time between Pb and Pb in FIG. 7) is a proportional relationship, the peak time occurring next time is calculated by the following formula using a cycle conversion coefficient (proportional constant).

$$t_{Pa-1} = \text{cycle conversion coefficient} \times t$$

$$t_{Pb-1} = t + t_{Pa-1}$$

The cycle conversion coefficient is a unique value determined based on the outer diameter of the tire.

The values of the peak times $t_{Pa-1}$ and $t_{Pb-1}$ described above are obtained by the energization timing calculation unit 21 (FIG. 5) and set in the energization control unit 22 (FIG. 5), and energization control is performed on the strain detection module 3, thereby realizing intermittent measurement. Note that, when the strain detection module 3 is in a non-energization state, the signal processing unit 20 is in a sleep mode, but when returning from the sleep mode, it is necessary to consider a return time to ensure proper energization control for the strain detection module 3. That is, FIG. 7 illustrates a waveform in which energization is started before a peak appears.

In the present waveform, the energization control unit 22 sets the state to the non-energization state, for example, at a time point when the measurement value of the positive level peak value 42 turns from increase to decrease or at a time point when the time derivative of the positive level peak value 42 at the time of measurement changes to negative. Similarly, for the negative level peak value 43, the state is set to the non-energization state, for example, at a time point when the measurement value turns from decrease to increase or at a time point when the time derivative at the time of measurement changes to positive. In this way, it is possible to suppress energization of an unnecessary section after the time point of exceeding the peak and to further reduce current consumption.

The energization to the strain detection module 3 is performed between the first step-in peak value 43 (Pa in FIG. 7) and the first intermediate time point peak value 42 (Pb in FIG. 7) and at timings when the step-in peak value 43 and intermediate time point peak value 42 occur subsequently. Then, the signal processing unit 20 is in the sleep mode during the time when the strain detection module 3 is not energized. Therefore, it is possible to reduce current consumption of the physical quantity detection device 2. The energization timing calculation unit 21 may calculate a cycle in which the step-in peak value 43 and the intermediate time point peak value 42 occur subsequently, by using at least two step-in peak values.

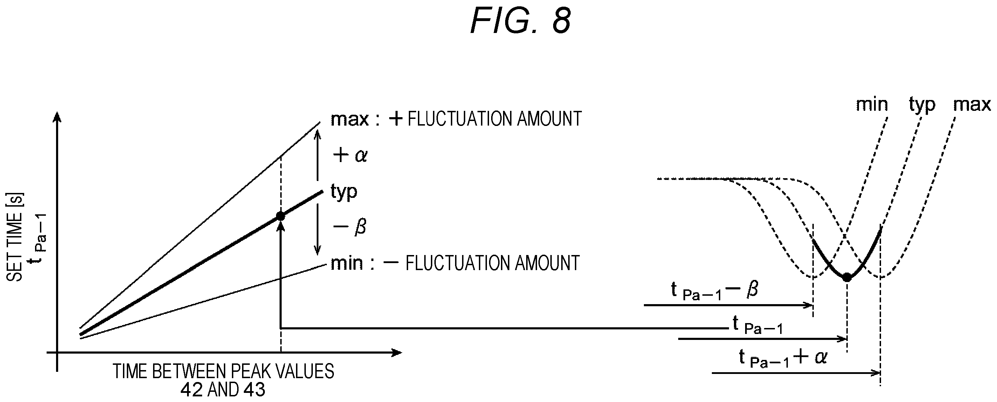

Next, a time width for energization control will be described with reference to FIG. 8.

FIG. 8 is a schematic diagram illustrating an example of correction means of an energization time width at the time $t_{Pa-1}$ processed in the physical quantity detection device according to the present embodiment.

FIG. 8 is a graph in which a horizontal axis represents the time difference t between the positive level peak value 42 (the peak value Pb in FIG. 7) and the negative level peak value 43 (the peak value Pa in FIG. 7), and a vertical axis represents the time $t_{Pa-1}$ of the peak value Pa-1 occurring next time. This graph shows that when a vehicle speed increases, the time difference t between the peak value 42 and the peak value 43 decreases, and the time $t_{Pa-1}$ of the peak value Pa-1 occurring next time on the vertical axis decreases. A thick line typ at the center of the graph rising to the right in FIG. 8 is a reference graph of the time difference t and the set time $t_{Pa-1}$.

Assuming a time when the tire outer diameter fluctuates, when the outer diameter decreases, the time to the next peak value decreases, and when the outer diameter increases, the time to the next peak value increases. For this reason, there is a concern that the measurement at the peak time fails at the time of energization at the time $t_{Pa-1}$ of the peak value 43 occurring next time obtained from the reference graph typ, but the problem is solved by the following method.

Specifically, as the correction of the energization time width, for example, a line max shown on the + side with respect to the reference graph typ indicates a relationship in a case where the tire outer diameter becomes larger than the reference due to an increase in air pressure or the like. That is, since the time difference to the peak value that occurs next time in a case where the tire outer diameter becomes large is longer than $t_{Pa-1}$ obtained from the time difference t between the peak value 43 and the peak value 42, the time $t_{Pa-1}$ of the peak value 43 that occurs next time is corrected by $+\alpha$.

Similarly, a line min shown on the - side with respect to the reference graph typ indicates a relationship in a case where the tire outer diameter becomes smaller than the reference due to a decrease in air pressure or the like. That is, since the time difference to the peak value that occurs next time in a case where the tire outer diameter becomes small is shorter than $t_{Pa-1}$ obtained from the time difference t between the peak value 43 and the peak value 42, the time $t_{Pa-1}$ of the peak value 43 that occurs next time is corrected by $-\beta$.

Thus, by adjusting the values of $\alpha$ and $\beta$, it is possible to correct the energization time width, prevent measurement omission of the peak value, and maintain the measurement accuracy.

Note that examples of the factor of fluctuation of the tire outer diameter include parameters such as a load on the tire and a wear amount of the tire in addition to the air pressure. In a case where the parameter of the fluctuation factor is known in advance by estimation or wireless communication from a host system, the reference graph typ may be directly corrected using the value to shorten the energization time width.

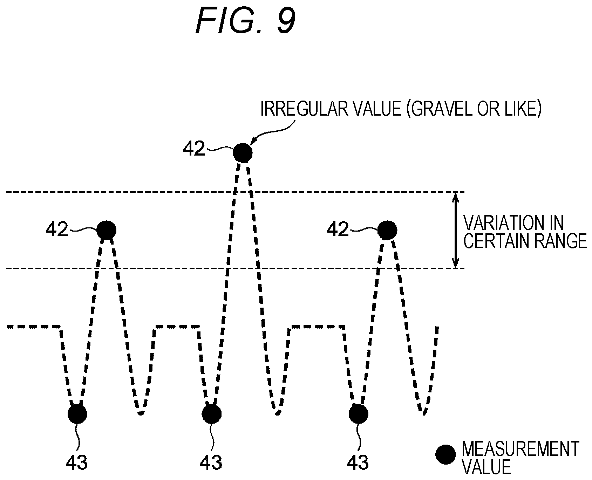

Next, an embodiment in a case where an irregular value is measured will be described with reference to FIG. 9.

FIG. 9 illustrates a measured waveform in a case where peak values of strain values for a plurality of times are measured. The number of times is set by the count setting unit 208 (FIG. 4), and the measured value is extracted by the feature point extraction unit 205. As an example of the extraction method, the measurement value has a variation in a certain range, and for example, when the tire 10 steps on gravel, a value deviating from the certain range can be determined as an irregular value and excluded from the feature point. Here, only feature points having peak values within a preset threshold are extracted from a plurality of peak values measured a set number of times, and measurement values having irregular values are excluded from the feature points.

As described above, when an irregular value that is not originally required to be transmitted is removed from the feature point in advance, and the load of the transmission data is reduced, the time of the energization to the antenna drive unit 4 can be shortened, and the low current consumption can be realized. In addition, road surface type detection may be configured to make a determination such that an abnormal value from a range of a determination threshold indicates a road surface type such as gravel and transmit the information, which allows selective use depending on the purpose while realizing low current consumption.

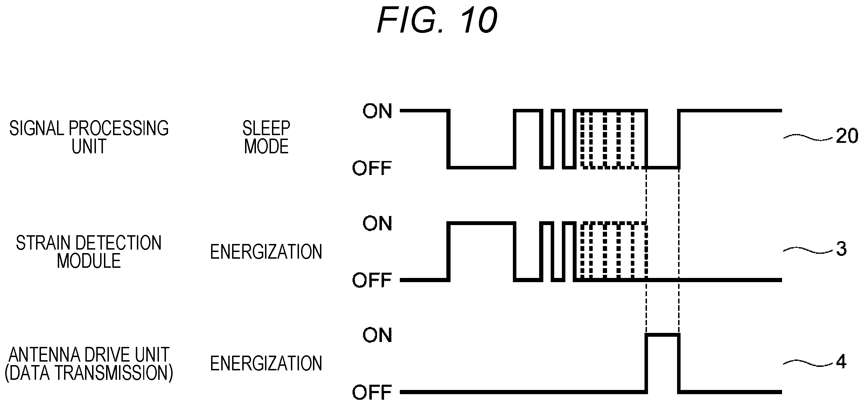

FIG. 10 is a timing chart illustrating the presence or absence of energization in each block of the physical quantity detection device according to the present embodiment.

In the present embodiment, the timing of the presence or absence of energization of the signal processing unit 20, the strain detection module 3, and the antenna drive unit 4 will be described.

First, the signal processing unit 20 transitions to the sleep mode to achieve low current consumption except at the time of measurement by the strain detection module 3 and at the time of data transmission by the antenna drive unit 4.

Next, in the strain detection module 3, low current consumption is achieved by the intermittent energization using the occurrence time $t_{Pa-1}$ of the peak value 42 and the occurrence time $t_{Pb-1}$ of the peak value 43 obtained from the time difference t between the first peak value 43 and the peak value 42 described above.

Next, in the antenna drive unit 4, there is also a concern that when all the measured data is transmitted, the transmission time becomes long, and the current consumption during that time increases, and when the transmission of the data is performed in parallel with the measurement, the current used per unit time increases, and the power supply voltage supplied from the coin battery 5 (FIG. 4) becomes temporarily unstable.

Therefore, in the physical quantity detection device 2 of the present embodiment, as illustrated in FIG. 10, the measurement of the strain by the strain detection module 3 and the data transmission of the measurement value by the antenna drive unit 4 are performed at different timings, before and after. As a result, the current used per unit time is lowered to stabilize the power supply voltage.

Furthermore, with a configuration in which only the values of the feature points extracted by the feature point extraction unit 205 are transmitted after the number of times of measurement specified by the count setting unit 208, the time of energization to the antenna drive unit 4 to be used at the time of communication is shortened to realize low current consumption. By using the above configuration, the physical quantity detection device 2 according to the present embodiment can realize low current consumption and long product life.

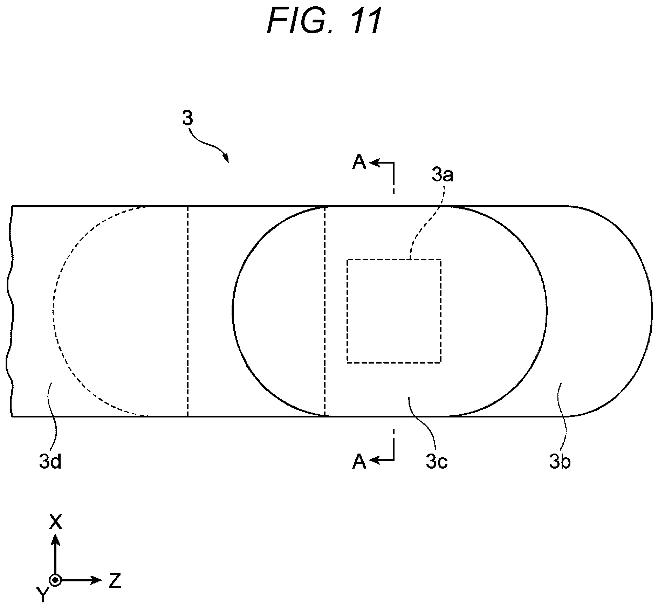

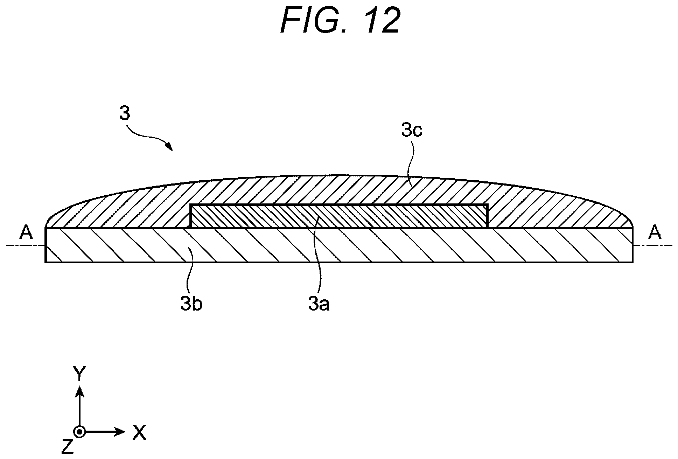

Next, an example of the strain sensor 1 in the present embodiment will be described with reference to FIGS. 11 and 12. The strain sensor 1 of the present embodiment includes a strain detection module 3.

FIG. 11 is a plan view of the strain detection module 3, and FIG. 12 is a cross-sectional view taken along line A-A of FIG. 11. As illustrated in FIG. 11, the strain detection module 3 includes a strain detection element 3a, a base member 3b, a sealing portion 3c, and an electric wire portion 3d. The strain detection element 3a is a semiconductor that outputs a strain amount according to a change in electric resistance, and is, for example, a strain sensor chip which is combined with a control circuit that performs a strain detection process to form one chip.

The strain sensor chip is an IC chip manufactured by a semiconductor process, and is, for example, a rectangular MOSFET sensor chip having a size of about 5 mm × 5 mm. In addition, the strain sensor chip includes, for example, a semiconductor formed by a CMOS process and a microelectromechanical system (MEMS). Note that, if the strain sensor chip is large, there is a possibility that the tire 10 is damaged when riding on a foreign substance, and thus, the strain sensor chip is preferably smaller than 5 mm × 5 mm. Note that the strain detection element 3a is not limited to the strain sensor chip, and for example, a strain gauge may be used.

The base member 3b is a member that fixes the strain detection element 3a to the tire inner peripheral surface, and is, for example, a metal thin plate having a linear expansion coefficient close to that of a semiconductor material (Si or the like) forming the strain detection element 3a. As the metal having a linear expansion coefficient close to that of the semiconductor material (Si or the like), for example, 42 alloy (alloy in which nickel is blended with iron) of about 5ppm/°C in which a difference from the linear expansion coefficient of silicon (Si) of about 4ppm/°C is about 1ppm/°C can be used.

As described above, a metal having a linear expansion coefficient close to that of the semiconductor material is used as the material of the base member 3b, so that it is possible to improve the detection accuracy of the strain of the strain detection element 3a.

In addition, the base member 3b is not limited to the above metal. For example, a metal (such as stainless steel, aluminum, copper, an iron-based alloy, or a non-precious metal plated with gold, nickel, tin, or the like) having corrosion resistance to sulfur gas generated from a tire may be used.

The base member 3b is a rectangular thin plate for accurately transmitting tire strain to the strain detection element 3a. In addition, an end portion of the base member 3b in the +Z direction (front side) is formed in an arc shape as illustrated in FIG. 11. Note that the shape of the base member 3b is not limited to the above, and may be a circle, an ellipse, or another polygon. The strain detection element 3a is fixed to the surface (+Z side surface) of the base member 3b with an adhesive, for example, an epoxy adhesive having high hardness.

The sealing portion 3c is a bonding wire (not illustrated) that electrically connects the strain detection element 3a and the electric wire portion 3d, and a resin, for example, an epoxy resin, applied to the surface of the base member 3b from above the strain detection element 3a. The strain detection element 3a and the bonding wire are sealed by the sealing portion 3c to be protected from the external environment. Note that the sealing portion 3c is not limited to an epoxy resin, and other resins such as a urethane resin and a silicone resin may be used.

The electric wire portion 3d is an electric wire that electrically connects the strain detection element 3a to a circuit, and is, for example, a flexible printed circuit (FPC). In addition, the strain detection element 3a is a semiconductor that outputs a strain amount according to a change in resistance, for example, a semiconductor strain sensor. As a result, it is possible to perform measurement with low power consumption (for example, about 1/1,000) and high sensitivity (for example, about 25,000 times) as compared with the strain gauge.

Although the embodiments of the present invention have been described in detail above, the present invention is not limited to the above embodiments, and various design changes can be made without departing from the spirit and gist of the present invention described in the claims. For example, the above-described embodiments have been described in detail for easy understanding of the present invention, and are not necessarily limited to those having all the described configurations. In addition, a part of the configuration of a certain embodiment can be replaced with the configuration of another embodiment, and the configuration of another embodiment can be added to the configuration of a certain embodiment. In addition, it is possible to add, delete, and replace other configurations for a part of the configuration of each embodiment.

Reference Signs List

1       strain sensor
2       physical quantity detection device
3       strain detection module (strain detection unit)
3a      strain detection element
3b      base member
3c      sealing portion
3d      electric wire portion
4       antenna drive unit
5       coin battery
6       DC/DC converter
10      tire
20      signal processing unit
21      energization timing calculation unit
22      energization control unit

30      road surface
40      sensor signal waveform
41      reference level
42      positive level peak value
43      negative level peak value
100     vehicle
101     control unit
102     receiver
201     measurement unit
202     peak calculation unit
203     time calculation unit
204     intermittent energization control unit
205     feature point extraction unit
206     energization timer setting unit
207     correction parameter setting unit
208     count setting unit

**Claims**

1. A physical quantity detection device that is installed in a tire and detects a physical quantity of a state of the tire, the physical quantity detection device comprising:

   a strain detection unit that detects strain of the tire; and
   a signal processing unit that processes a detection signal detected by the strain detection unit,
   wherein the signal processing unit
   calculates a step-in peak value of strain occurring on any one side of compression or tension at a time of step-in in which a strain detection region of the tire comes into ground contact with a road surface by rotation of the tire, and an intermediate time point peak value of strain occurring on another side of compression or tension at an intermediate time point between the time of step-in and a time of kick-out in which the strain detection region of the tire is separated from the road surface, and
   calculates a cycle in which the step-in peak value and the intermediate time point peak value occur subsequently, based on a time difference between the step-in peak value and the intermediate time point peak value or an inclination of a change in the strain, and energizes the strain detection unit in accordance with the cycle.

2. The physical quantity detection device according to claim 1, wherein the signal processing unit

   energizes the strain detection unit from the step-in peak value to the intermediate time point peak value at a first time, and
   energizes the strain detection unit at timings when the step-in peak value and the intermediate time point peak value occur subsequently.

3. The physical quantity detection device according to claim 1, wherein the signal processing unit

   sets the number of times of measurement of the step-in peak value and the intermediate time point peak value, extracts a feature point having a peak value within a preset threshold value from among a plurality of peak values measured the set number of times, and
   transmits data of a peak value of the feature to outside.

4. The physical quantity detection device according to claim 1, wherein the signal processing unit calculates the cycle by using at least two times of the step-in peak values.

5. The physical quantity detection device according to claim 1, wherein for a first time, the signal processing unit ends energization to the strain detection unit at a time point of extracting the intermediate time point peak value from the step-in peak value.

6. The physical quantity detection device according to claim 1, wherein the signal processing unit sets, as an end condition of first energization, an elapsed time from start of the first energization or the number of times a differential value of the strain value has changed from positive to negative or from negative to positive.

7. The physical quantity detection device according to claim 1, wherein the signal processing unit calculates the cycle by using a cycle conversion coefficient that is a unique value determined from an outer diameter of the tire.

8. The physical quantity detection device according to claim 1, wherein the signal processing unit corrects an energization time width of the energization by using at least one of an air pressure of the tire, a load on the tire, or a wear amount of the tire.

# FIG. 1

# FIG. 2

(1)

(2)

# FIG. 3

(1)

(2)

(3)

(4)

(5)

## FIG. 4

COIN BATTERY 5

POWER SOURCE

DC/DC 6

POWER SOURCE

WITH SLEEP FUNCTION

MPU 20

ON/OFF

ANTENNA DRIVE UNIT 4

ON/OFF

STRAIN DETECTION MODULE 3

1

2

EP 4 589 273 A1

# FIG. 5

3 — STRAIN DETECTION MODULE

POWER SUPPLY ON/OFF

2

20

SIGNAL PROCESSING UNIT (MPU)

201 — MEASUREMENT UNIT

MEASUREMENT VALUE (TIME, STRAIN VALUE)

WITH SLEEP FUNCTION (LOW CURRENT STATE)

ENERGIZATION TIMER SETTING UNIT

206

ENERGIZATION TIMING CALCULATION UNIT

21

PEAK CALCULATION UNIT — 202

EXTRACTION VALUE (TIME)

TIME CALCULATION UNIT — 203

ENERGIZATION TIMING VALUE $(t_{Pa-1}, t_{Pb-1})$

22

ENERGIZATION CONTROL UNIT

207 — CORRECTION PARAMETER SETTING UNIT

208 — COUNT SETTING UNIT

FEATURE POINT EXTRACTION UNIT — 205

ANTENNA DRIVE UNIT

POWER SUPPLY ON/OFF

4

EP 4 589 273 A1

# FIG. 6

```
                    START
                      │
        ┌─────────────┼──────────────────────────────┐
        │             ▼                               │
        │   ENERGIZATION TIMER SETTING 1 ─S101        │
        │             │                               │
        │             ▼                               │
        │      FIRST MEASUREMENT ─S102                 │
        │             │                               │
        │             ▼         S103                  │
        │      REFERENCE LEVEL        Yes              │
        │     <MEASUREMENT VALUE ────────┐            │
        │             │No                │            │
        └─────────────┼─────────────────┘            │
```

| S101 | ENERGIZATION TIMER SETTING 1 |
| S102 | FIRST MEASUREMENT |
| S103 | REFERENCE LEVEL < MEASUREMENT VALUE |
| S104 | ENERGIZATION TIMER SETTING 2 |
| S105 | NORMAL MEASUREMENT |
| S106 | PEAK EXTRACTION |
| S107 | ENERGIZATION TIMING VALUE SETTING |
| S108 | CORRECTION PARAMETER SETTING |
| S109 | INTERMITTENT MEASUREMENT |
| S110 | COUNT SETTING ≤ COUNT NUMBER |
| S111 | FEATURE POINT EXTRACTION |
| S112 | DATA TRANSMISSION |
| S113 | ENERGIZATION TIMER INTERRUPTION |
| S114 | CONDITION MISMATCH INFORMATION DATA TRANSMISSION |

20, 201, 21, 22, 205

FIG. 7

$$t_{Pa\text{-}1} = \text{CYCLE CONVERSION COEFFICIENT} \times t$$

$$t_{Pb\text{-}1} = t + t_{Pa\text{-}1}$$

EP 4 589 273 A1

*FIG. 8*

min  typ  max

max : + FLUCTUATION AMOUNT

$+\alpha$

typ

$-\beta$

min : − FLUCTUATION AMOUNT

$t_{Pa-1} - \beta$

$t_{Pa-1}$

$t_{Pa-1} + \alpha$

SET TIME [S]  $t_{Pa-1}$

TIME BETWEEN PEAK VALUES 42 AND 43

19

## FIG. 9

IRREGULAR VALUE (GRAVEL OR LIKE)

42

VARIATION IN CERTAIN RANGE

42    42

43    43    43    ● MEASUREMENT VALUE

# FIG. 10

SIGNAL PROCESSING UNIT — SLEEP MODE — 20

STRAIN DETECTION MODULE — ENERGIZATION — 3

ANTENNA DRIVE UNIT (DATA TRANSMISSION) — ENERGIZATION — 4

# FIG. 11

# FIG. 12

## INTERNATIONAL SEARCH REPORT

| International application No. |
| --- |
| **PCT/JP2022/034691** |

**A. CLASSIFICATION OF SUBJECT MATTER**

*G01L 5/00*(2006.01)i
FI: G01L5/00 Z

According to International Patent Classification (IPC) or to both national classification and IPC

**B. FIELDS SEARCHED**

Minimum documentation searched (classification system followed by classification symbols)

G01L 1/00- 1/26; G01L5/00-23/32; G01L27/00-27/02; G08C13/00-25/04; B60C23/00-23/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-520499 A (NOKIAN RENKAAT OYJ) 30 March 2022 (2022-03-30) <br> entire text, all drawings | 1-8 |
| A | WO 2019/142869 A1 (DENSO CORP.) 25 July 2019 (2019-07-25) <br> entire text, all drawings | 1-8 |
| A | US 2016/0303928 A1 (CONTINENTAL AUTOMOTIVE FRANCE) 20 October 2016 (2016-10-20) <br> entire text, all drawings | 1-8 |
| A | JP 2015-217713 A (BRIDGESTONE CORP.) 07 December 2015 (2015-12-07) <br> entire text, all drawings | 1-8 |
| A | JP 2009-248783 A (PANASONIC CORP.) 29 October 2009 (2009-10-29) <br> entire text, all drawings | 1-8 |
| A | JP 2005-88662 A (TOYOTA MOTOR CORP.) 07 April 2005 (2005-04-07) <br> entire text, all drawings | 1-8 |

☐ Further documents are listed in the continuation of Box C.　　☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **19 October 2022** | **08 November 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2022/034691**

| Patent document cited in search report | | | Publication date (day/month/year) | Patent family member(s) | | | Publication date (day/month/year) |
|---|---|---|---|---|---|---|---|
| JP | 2022-520499 | A | 30 March 2022 | AU | 2020251920 | A | |
| | | | | CA | 3146498 | A | |
| | | | | CN | 113646190 | A | |
| | | | | EP | 3715151 | A1 | |
| | | | | US | 2022/0088978 | A1 | |
| | | | | WO | 2020/200660 | A1 | |
| WO | 2019/142869 | A1 | 25 July 2019 | JP | 2019-123482 | A | |
| | | | | US | 2020/0298635 | A1 | |
| US | 2016/0303928 | A1 | 20 October 2016 | CN | 105764715 | A | |
| | | | | FR | 3014366 | A1 | |
| | | | | WO | 2015/082054 | A1 | |
| JP | 2015-217713 | A | 07 December 2015 | (Family: none) | | | |
| JP | 2009-248783 | A | 29 October 2009 | (Family: none) | | | |
| JP | 2005-88662 | A | 07 April 2005 | DE | 102004044954 | A1 | |
| | | | | US | 2005/0057346 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6317999 B